(19) **Europäisches Patentamt / European Patent Office / Office européen des brevets**

(11) **EP 1 592 249 B1**

(12) **EUROPEAN PATENT SPECIFICATION**

(45) Date of publication and mention
of the grant of the patent:
**13.06.2007 Bulletin 2007/24**

(51) Int Cl.:
*H04N 7/01* (2006.01)  *H04N 5/44* (2006.01)
*H04N 7/26* (2006.01)  *H04N 5/14* (2006.01)

(21) Application number: **04010300.4**

(22) Date of filing: **30.04.2004**

(54) **Reverse film mode extrapolation**

Umkehr-Filmmodus-Extrapolation

Extrapolation à l'envers de mode ciné

(84) Designated Contracting States:
**DE FR GB**

(43) Date of publication of application:
**02.11.2005 Bulletin 2005/44**

(73) Proprietor: **MATSUSHITA ELECTRIC INDUSTRIAL CO., LTD.**
**Kadoma-shi, Osaka 571-8501 (JP)**

(72) Inventors:
• **Landsiedel, Thilo**
**63110 Rodgau (DE)**

• **Grundmeyer, Michael**
**55129 Mainz (DE)**

(74) Representative: **Grünecker, Kinkeldey, Stockmair & Schwanhäusser Anwaltssozietät**
**Maximilianstrasse 58**
**80538 München (DE)**

(56) References cited:
**EP-A- 0 994 626**  **EP-A- 1 107 609**
**US-A- 5 610 662**  **US-A- 6 058 140**
**US-A1- 2003 123 547**

EP 1 592 249 B1

**Description**

The present invention relates to an improved film mode determination. In particular, the present invention relates to a method for determining improved film mode determinations and to a corresponding film mode detector.

Film mode indications are employed in motion compensated image processing which is used in an increasing number of applications, in particular in digital signal processing of modern television receivers. Specifically, modern television receivers perform a frame-rate conversion, especially in the form of an up-conversion or a motion compensated up-conversion, for increasing the picture quality of the reproduced images. Motion compensated up-conversion is performed, for instance, for video sequences having a field or frame frequency of 50 Hz to higher frequencies like 60 Hz, 66.67 Hz, 75 Hz, 100 Hz, etc. While a 50 Hz input signal frequency mainly applies to a television signal broadcast based on PAL or SECAM standards, NTSC based video signals have an input frequency of 60 Hz. A 60 Hz input video signal may be up-converted to higher frequencies like 72 Hz, 80 Hz, 90 Hz, 120 Hz, etc.

During up-conversion, intermediate images are to be generated which reflect the video content at temporal positions which are not represented in the 50 Hz or 60 Hz input video sequence. For this purpose, the motion of objects has to be taken into account in order to appropriately reflect the changes between subsequent images caused by the motion of objects. The motion of objects is calculated on a block basis, and motion compensation is performed based on the relative position and time of the newly generated image between the previous and subsequent images.

For motion vector determination, each image is divided into a plurality of blocks. Each block is subjected to motion estimation in order to detect a shift of an object from the previous image.

In contrast to interlaced video signals like PAL or NTSC signals, motion picture data is composed of complete frames. The most widespread frame rate of motion picture data is 24 Hz (24p). When converting motion picture data into an interlaced video sequence for display on a television receiver (this conversion is called telecine), the 24 Hz frame rate is converted by employing a "pull down" technique.

For converting motion picture film into an interlaced video sequence in accordance with the PAL broadcast standard having a field rate of 50 Hz (50i), a 2-2 pull down technique is employed. The 2-2 pull down technique generates two fields out of each film frame. The motion picture film is played at 25 frames per second (25p). Consequently, two succeeding fields contain information originating from the same frame and representing the identical temporal position of the video content, in particular of moving objects.

When converting motion picture film into an NTSC signal having a field rate of 60 Hz (60i), the frame rate of 24 Hz is converted into a 60 Hz field rate employing a 3-2 pull down technique. This 3-2 pull down technique generates two video fields from a given motion picture frame and three video fields from the next motion picture frame.

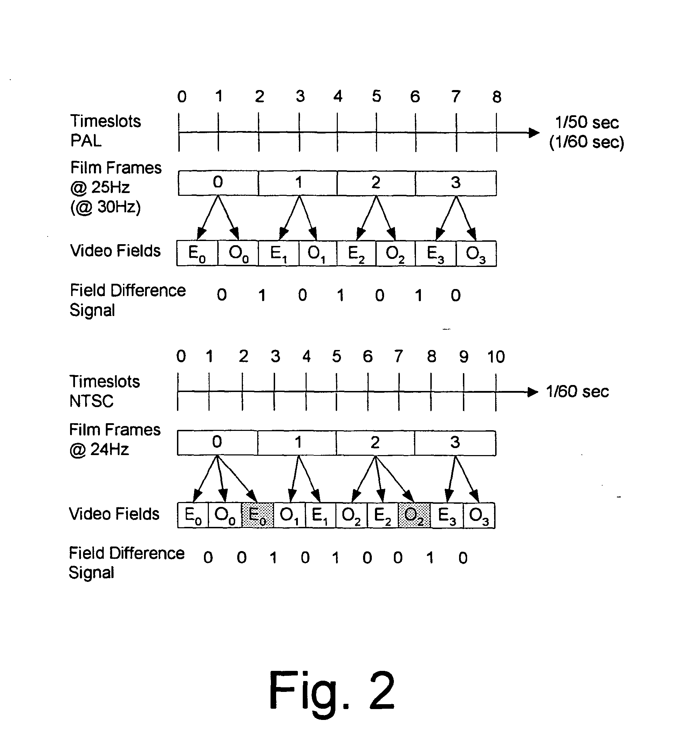

The telecine conversion process for generating interlaced video sequences in accordance with different television standards is illustrated in Fig. 2. The employed pull down techniques result in video sequences which include pairs or triplets of adjacent fields reflecting an identical motion phase. The individual motion phases are detected based on the calculation of a field difference between subsequent fields. Only fields which stem from different film frames enable the detection of motion.

The detection of the individual pull down pattern employed is required in order to appropriately perform a picture quality improvement processing, in particular to decide whether or not a motion compensation is to be employed. A detection of a respective pull down pattern is already known, for instance, from EP-A-0 720 366 and EP-A-1 198 138.

EP-A-0 994 626 relates to the compression of image sequences based on motion estimation algorithms. Motion estimation is employed for removing temporal redundancies among successive images. For this purpose, a macro block of a current image is estimated either based on a forward predicted macro block or based on backward predicted macro block, or alternatively, an average of both. Further a 3:2 pulldown conversion recognition is carried out in order to remove redundancies resulting from a duplication of film frames when converted into TV images.

The digital compression of film and video source material is described in US-A-6, 058, 140. Redundant fields which result from a 3:2 pulldown conversion are identified and removed for compression. Redundant fields are detected based on a correlation of motion vectors of respective blocks in adjacent fields.

US-A-2003/0123547 describes a transcoder for re-encoding a video sequence having a different input and output scan format.

US-A-5, 610, 662 relates to a conversion of progressive film source images into interlaced format. For eliminating conversion artefacts in TV systems, intermediate fields are generated from the original film frames by motion compensated interpolation. The motion compensation measures the velocities of moving objects and generates the intermediate fields having the moving objects correctly positioned.

The present invention aims to further improve film mode detection and to provide an improved method of film mode detection and an improved film mode detector.

This is achieved by the features of the independent claims.

It is the particular approach of the present invention to improve film mode detection by obtaining film mode indications on a local basis and to extrapolate film mode indications. The extrapolation aims to improve the reliability of film mode indications when the detected film mode indication changes due to the motion of a moving image object, in particular to avoid a delay in detecting the correct film mode indication. For this purpose, the film mode indication of a block determined in accordance with a reversed motion vector of a current block is extrapolated, especially towards the current block. In this manner, film mode indications at the border areas of a moving image objects can be determined with improved accuracy and reliability. The image quality achievable by picture improvement algorithms is accordingly enhanced.

Due to a delay that is introduced in order to increase the reliability of film mode indications, film mode indications of image areas around the edges of a moving object generally do not switch immediately to a newly detected mode. However, this increase in reliability is only achieved at the expense of a correct determination of film mode indications at the edges of a moving object. This drawback is avoided by employing a reverse film mode indication extrapolation in accordance with the present invention.

For this purpose, the present invention evaluates image areas behind an edge of a moving objection in a direction reversed to the direction of the moving object. A target image area is determined in accordance with the reversed motion vector pointing from the current image area in the direction of the reversed motion vector. The image areas in between are set to the film mode indication of the target image area. In this manner, a switching delay can be avoided without reducing the reliability of film mode indications.

Preferably, extrapolation is only performed if the current block is not in film mode. Accordingly, a reverse extrapolation of the invention is only performed if a change in the detected film mode indication occurred between the current image area and the target image area.

If the reversed motion vector points from the current image area to a position outside of the image, the reversed motion vector length is preferably clipped such that the clipped vector only points to a position located within the current image.

Preferably, the images of the image sequence are divided into a plurality of blocks wherein the film mode indications and motion vectors are provided on a block basis, i.e. the image areas correspond to the block structure. Accordingly, the reverse extrapolation can be performed in a simple manner based on an existing image area structure.

Preferably, the reversed motion vector pointing from a current block to a target block is quantized in order to fit into the raster of image blocks. Accordingly, the reverse film mode extrapolation can be implemented in a simple manner.

The image areas to be set to film mode when performing a reverse film mode extrapolation are preferably selected in accordance with a predefined image area pattern, i.e. a pattern that identifies the individual image areas to be corrected. In this manner, those image areas for which the film mode indication needs to be corrected can be determined a reliable and simple manner.

The predefined pattern is preferably selected from a plurality of pre-stored patterns in a memory. This selection is performed based on the relative positions of the current image area and the target image area. Accordingly, the pattern to be applied can be selected in a fast and simple manner.

Preferably, the pre-stored patterns provide all possible combinations of relative positions of the current image area and the target image area. The image areas for which film mode indications are to be corrected can thus be determined in a reliable manner.

According to a preferred embodiment, the image areas to be set to film mode are determined based on an iterative determination starting at the current image area and approaching the target image area in a stepwise manner.

The step size for determining new image areas to be set to film mode is preferably determined based on the motion vector orientation. Most preferably, the step size is set by dividing the larger vector component by the smaller vector component of the horizontal and vertical vector component.

Preferably, an additional indication is stored in connection with each of the image areas indicating whether or not the film mode indication of an image area has been corrected. In this manner, an original film mode indication can be distinguished from a corrected film mode indication in a reliable manner. A further reverse extrapolation of film mode indications can be inhibited when the occurrence of a "corrected" film mode indication is detected. In this manner, a once extrapolated film mode indication does not serve as a basis for further film mode extrapolations.

According to a preferred embodiment, image areas between a current image area and a target image area are set to video mode if the film mode indication of the target image area is video mode. In this manner, the film mode indications of a moving object in video mode inserted into an environment in film mode can be accurately determined by extrapolating video mode accordingly.

Preferably, the video mode is only extrapolated if the current image area is in film mode. A video mode extrapolation is consequently only performed if a film mode indication switch between the current image area and the target image area occurs.

Fig. 1      illustrates an example of a division of a video image into a plurality of blocks of a uniform size,

Fig. 2      illustrates pull down schemes for converting motion picture data into a PAL or NTSC interlaced video sequence,

Fig. 3    illustrates an example for a video image divided into a plurality of blocks and the auxiliary information stored with respect to each of the blocks,

Fig. 4    illustrates an example of a delayed detection of film mode indications at borders of moving image objects,

Fig. 5    illustrates the reverse extrapolation principle of the present invention,

Fig. 6    is a flow chart illustrating the individual steps performed during extrapolation of a film mode indication in accordance with the present invention,

Fig. 7    is a flow chart of an iterative block determination for the reverse extrapolation of a film mode indication according to one preferred embodiment of the present invention,

Fig. 8    illustrates an example of an iterative block determination for the reverse extrapolation of a film mode indication according to one preferred embodiment of the present invention,

Fig. 9    illustrates a step wisely determination of image blocks for which the film mode indication is to be corrected in accordance with another preferred example of the present invention, and

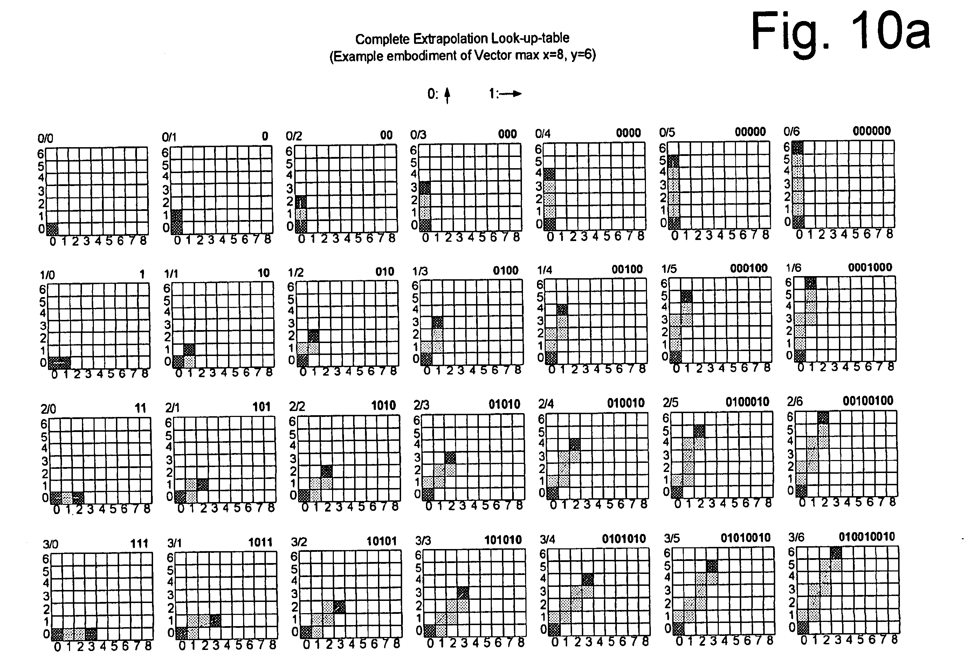

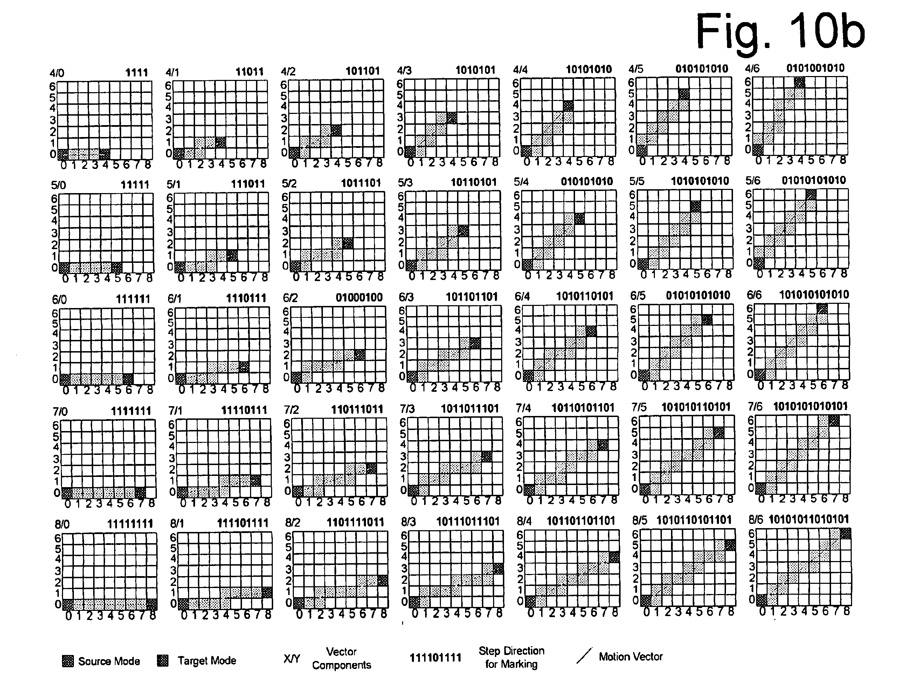

Fig. 10    illustrates an example for an extrapolation look-up-table in accordance with the other preferred example of the present invention.

The present invention relates to digital signal processing, especially to digital signal processing in modern television receivers. Modern television receivers employ up-conversion algorithms in order to increase the reproduced picture quality. For this purpose, intermediate images are to be generated from two subsequent images. For generating an intermediate image, the motion of objects has to be taken into account in order to appropriately adapt the object position to the point of time reflected by the interpolated image.

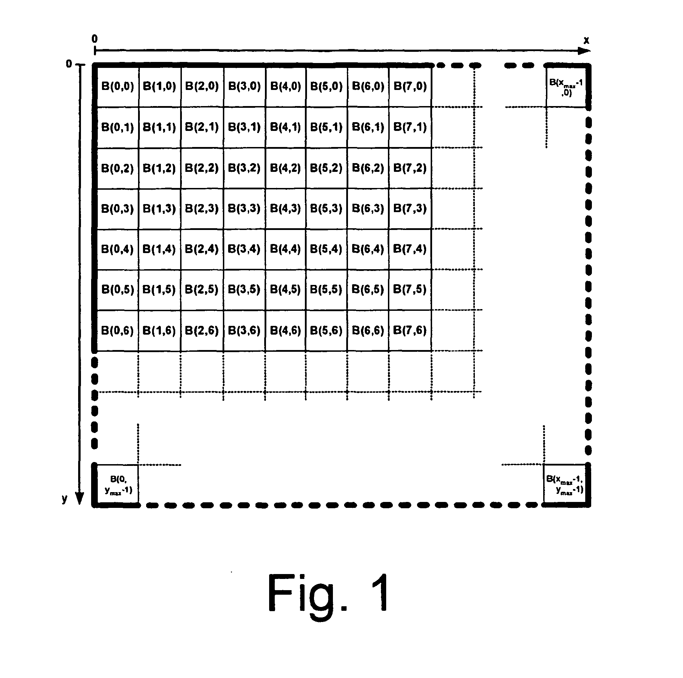

Motion estimation for determining motion vector and motion compensation is performed on a block basis. For this purpose, each image is divided into a plurality of blocks as illustrated, for example, in Fig. 1. Each block is individually subjected to motion estimation by determining a best matching block in the previous image.

In order to be able to correctly apply motion compensation to an image area, the determination of a film mode indication, i.e. film mode or video mode, for that image area is required. By applying the correct picture quality improvement processing in accordance with the detected film mode indication, image artefacts are avoided.

A video signal processing is particularly required to drive progressive displays and to make use of higher frame rates, in particular for HDTV display devices. The detection of motion picture film converted into interlaced image sequences for television broadcast (further referred to as film mode) is crucial for the signal processing.

For picture improvement processing an interlaced/progressive conversion (I/P) is possible by employing an inverse telecine processing, i.e. a re-interleaving of even and odd fields. For image sequences stemming from a 3-2 pull down scheme, the single redundant field from a triplet of fields stemming from the same film frame (the grey colored fields in Fig. 2) is eliminated.

More advanced up-conversion algorithms employ a motion vector based interpolation of frames. The output frame rate can be an uneven fraction of the input video rate, for instance, a 60 Hz input signal frequency may be up-converted to a 72 Hz output frequency corresponding to a ratio of 5:6. Accordingly, only every sixth output frame can be generated from a single input field alone when a continuous motion impression of moving objects is to be maintained.

The film-mode characteristic of an image may be determined on an image basis or, according to an improved approach, be a local characteristic of individual image areas. In particular, television signals are composed of different types of image areas such as no-motion areas (e.g. logo, background), video camera areas (e.g. newsticker, video insertion) and film mode areas (e.g. main movie, PIP). A pull down scheme detection is separately performed for each of these image areas enabling an up-conversion result with improved picture quality.

Film mode detection generally involves recognition of a pull down pattern. Conventionally, pixel differences are accumulated to a Displaced Frame Difference (DFD) representing the motion between subsequent images. In order to avoid sudden changes in the detected film-mode indication, which would result in an unstable impression to the viewer, detection delays are employed for triggering a switch from a film mode to a video mode and vice versa.

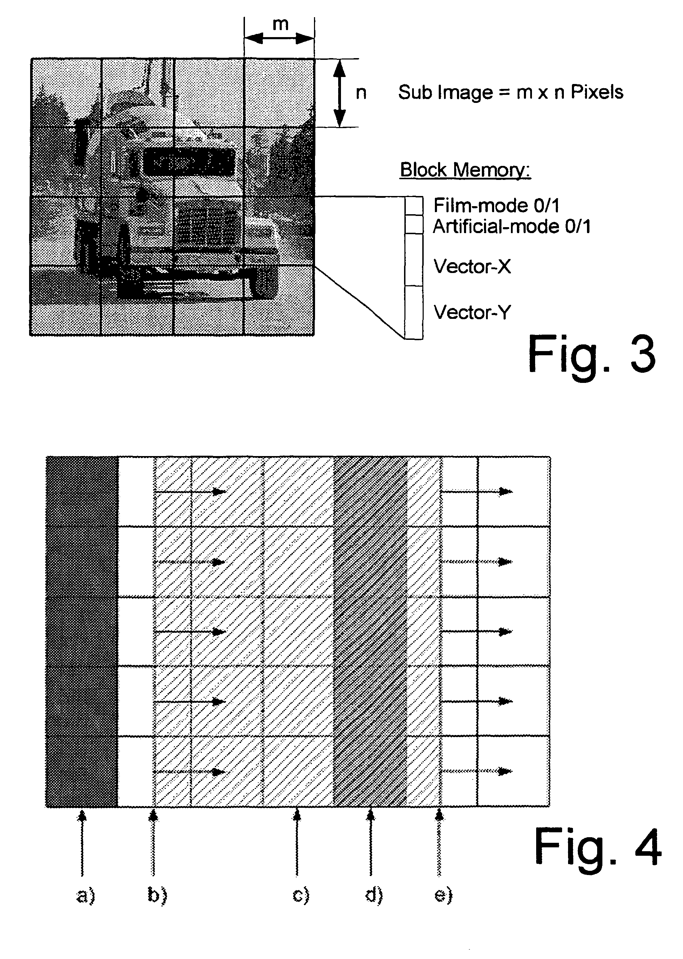

In order to increase the film mode indication accuracy, a film mode detection is performed on a block basis as illustrated, for instance, in Fig. 3. For each block of an m*n pixel size, a motion vector and film mode indication are determined.

The data obtained for each of the image blocks are illustrated for a single block in Fig. 3. In addition to a horizontal and vertical motion vector component, a film mode indication is stored indicating whether the current block is film mode or video mode. Further, a correction of the assigned film mode indication is indicated by the "artificial mode" indication in order to distinguish an original film mode indication from a later correction thereof.

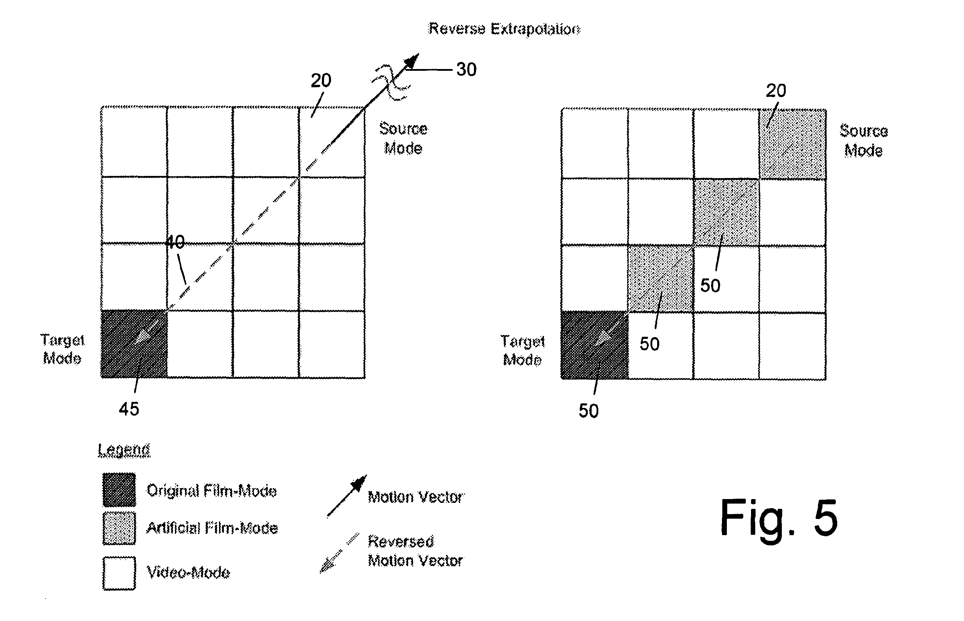

A block based film mode detection and problems arising therefrom are illustrated in Fig. 4. A moving object (c) having a uniform structure only enables a reliable detection of motion values, i.e. DFD value, at the border areas (b, e). A meaningful motion detection and consequently a detection of motion patterns and film mode indications will not be possible except for these border areas.

Due to a switching delay for determining film mode indications, which is introduced in order to increase their reliability, the detected film mode indications (a, d in Fig. 4) are spatially offset with respect to the leading edge (e) and to the trailing edge (b) of the moving object (c), respectively. It is a particular problem arising therefrom that the border lines (b, e) of the moving object (c) have no correctly determined film mode indication and an efficient picture quality improvement processing can therefore not be performed for these image areas.

However, the border areas of image objects are particularly important for the perceived image quality. The application of an inappropriate picture improvement processing based on an incorrect film mode indication for a particular image area leads to a picture quality degradation instead of a picture quality improvement. Thus, it is crucial for an efficient picture quality processing to determine reliable film mode indications for object edges.

In order to reliably determine film mode indications for the border areas of moving image objects, the film mode indications are extrapolated in a direction opposite to the motion direction of the image object.

The approach of the present invention to extrapolated film mode indications will now be described in detail with reference to Fig. 5. Each block of a video image (cf. Fig. 1) comprises a plurality of pixels, preferably 8*4 pixels in interlaced video images and 8*8 pixels in progressive images. Accordingly 90*60 blocks are provided for each NTSC interlaced video image.

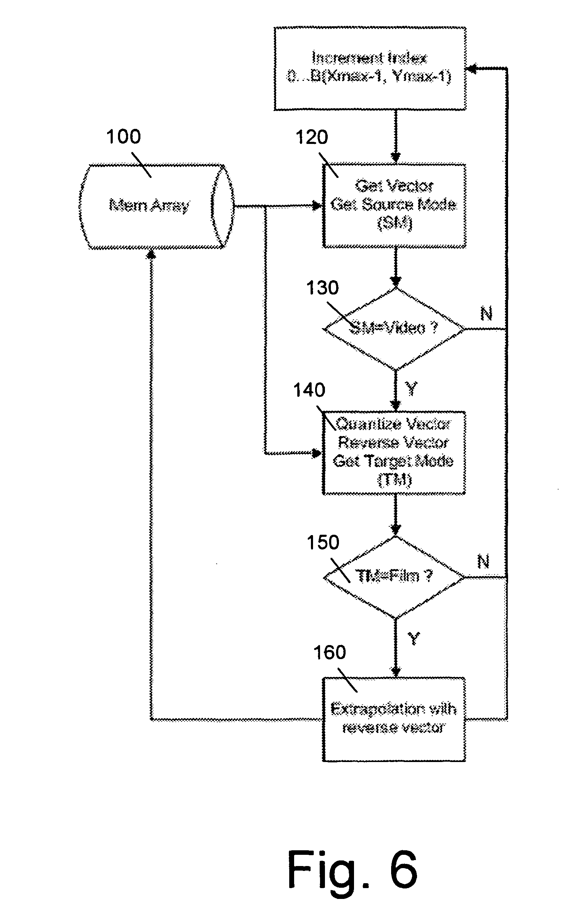

Film mode determination and motion estimation is performed for each individual block. The determination results are stored, as illustrated in Fig. 3, for each block separately in a memory area 100 illustrated in Fig. 6. While Fig. 6 depicts the individual steps for extrapolating film mode indications in a reverse manner, Fig. 5 illustrates the respective result thereof.

The reverse extrapolation process is started by obtaining the motion vector 30 and the source mode for the current block 20 (step 120). If the current block turns out to be video mode in step 130, the direction of motion vector 30 of the current block 20 is reversed in order to obtain reversed motion vector 40 in step 140. Further, the length of the reversed vector 40 is quantized in order to fit into the block raster of the video image (cf. Fig. 1). If the reversed motion vector 40 points to a position outside of the current image, the motion vector length is clipped in order to point to a respective block at the image border.

After determining the target block 45 based on the motion vector length of the reversed motion vector 40 starting from the current block 20, the mode (target mode) of target block 45 is determined (step 140). An extrapolation of the target mode is only performed if the following conditions are met:

$$\text{Source mode} = \text{video mode},$$

$$\text{Target mode} = \text{film mode}.$$

Only if it has been determined in step 150, that the mode of the target block is film mode, a reverse extrapolation is performed towards the current block 20 in step 160. The extrapolation is performed by setting each block 50 under the reversed motion vector pointing from current block 20 to target block 45 to film mode. Alternatively, the film mode indication of the current block is also set to film mode.

The determination of blocks to be set to film mode can be implemented by means of a modulo addressing of the current block index. That reversed motion vector component of the horizontal and vertical component, which has the larger value, is considered as primary axis $V_1$, while the smaller reversed motion vector component is considered to represent a secondary axis $V_2$. The respective signs determine the direction $Dir_1$, $Dir_2$.

The step width for determining stepwisely blocks, which are to be set to film mode, is calculated based on an integer division of the larger motion vector component by the smaller motion vector component as indicated below:

$$V_1 = \left(|V_x| > |V_y|\right)? V_X : V_Y \qquad Dir_1 = Sign(V_1)$$

$$V_2 = \left(|V_x| > |V_y|\right)? V_Y : V_X \qquad Dir_2 = Sign(V_2) \qquad Step = \frac{|V_1|}{|V_2|}$$

It is to be noted that each of these artificially set film mode blocks 50 (in Fig. 5) are marked accordingly as illustrated in Fig. 3 by an "artificial mode bit". Accordingly, each film mode indication can be distinguished to be originally determined or to be artificially set. This artificial mode bit is evaluated before starting the extrapolation process in order to avoid a further extrapolation of those film mode indications, which are artificially set.

The target block is not set to artificial mode. The first block set to film mode and having the artificial bit set accordingly is the source mode block.

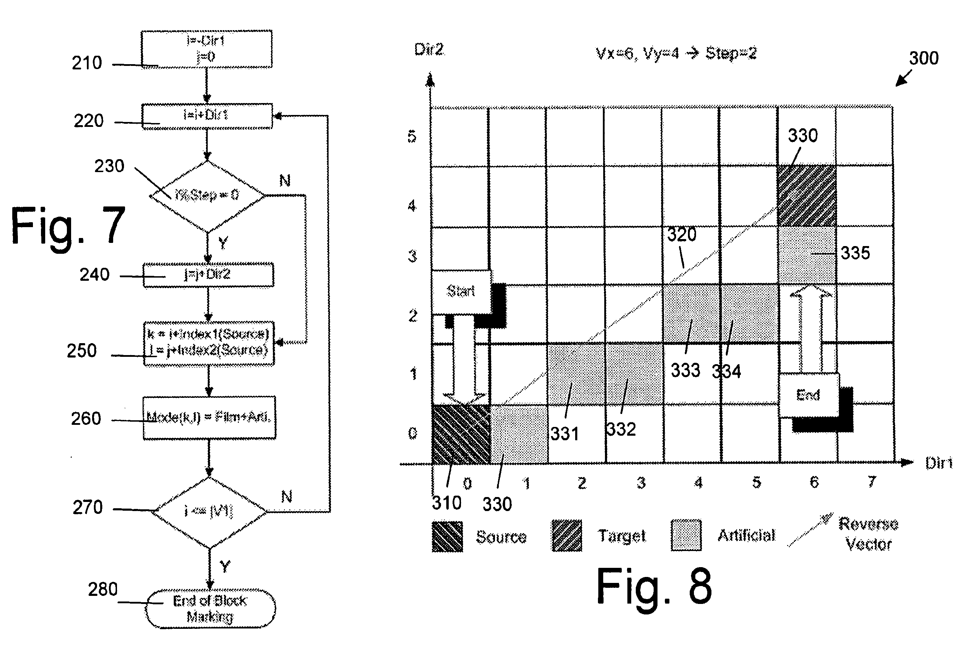

The method for iteratively determining the blocks 50 between the source block 20 and the target block 45 is illustrated in Fig. 7. An example result for a reverse vector of $V_x=6, V_y=4$ is shown in Fig. 8.

For the method of modulo addressing, the typical loop variables i and j are used. The variable i is used for the primary direction Dir1, whereas j is used for Dir2.

The originally determined source block 310 is in video mode, whereas the target block 330 is in film mode. The latter shall not be set again and marked as artificial, whereas the first source block is to be marked as artificial and set to film mode. Therefore i is initially set to minus Dir1 in S210.

Processing starts at step S220 by adding the sign of Dir1 to the index i. This is the block 310 "Start" in figure 8.

In step 230 the condition for an increment of the variable j is checked, which is responsible for incrementing the artificial marking position in S240 in the secondary direction Dir2. The condition is true if i equals an even multiple of the value "Step" calculated above. This is the case for block 331,333,335 in figure 8.

In step S250 the absolute position of the artificial film block is calculated, by means of adding the current indexes i and j to the absolute position of the source block (Index1/2(Source)). The result is held in the variables k and l indicating the position in the image. Then the artificial bit and film bit are set in the image in step S260.

If the index i of the primary direction Dir1 has advanced to a value equal to the vector magnitude of V1,checked in S270, then modulo addressing ends in S280 ("End" block 335 in figure 8), else a jump back to S220 occurs.

The iterative approach for determining the blocks between the current block 20 and the target block 45 stops before the target block is reached, because the original film mode must not be marked as artificial.

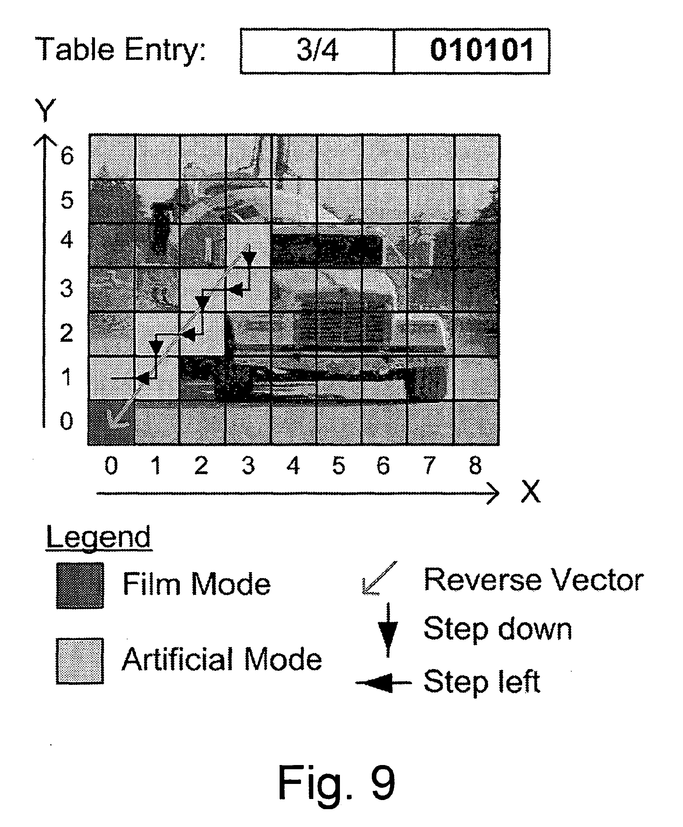

According to another preferred embodiment, the artificial mode marking is implemented by employing a look-up-table (LUT) for every possible combination of x/y vector components. Each entry in the look-up-table identifies those blocks, which are to be marked artificially. For this purpose, the stored pattern describes which block is to be marked next. This can be implemented based on a binary indication wherein a "0" indicates up/down step and a "1" indicates right/left step. The sign of the respective vector component gives the direction. The example illustrated in Fig. 9 is based on a reversed motion vector having two negative components x=-3, y=-4. The table entry indicates six steps of 010101, i.e. down, left, down, left....

This approach does not allow the marking of blocks in a diagonal manner without having any adjacent blocks in a horizontal or vertical direction. Consequently, the number of blocks marked increases resulting in a better vector path coverage.

The skilled person is aware that the described approaches for determining those blocks to be artificially set to film mode between a current block and a target block is not limited to the described embodiments and every other approach may be used with the same effect.

The image area is described above to correspond to a block size know from motion estimation. The present invention is not limited to such an image area size for film mode determination and, particularly, for film mode extrapolation. Image areas larger or smaller than a block may be defined. For instance, image areas smaller than a block refine the film mode resolution. A film mode determination and extrapolation may be implemented based on image areas having a size between a whole field and just a single pixel, or even a sub-pixel size.

Further, the film mode extrapolation can be enhanced by an additionally implemented motion vector aided extrapolation of detected video modes of the film mode indication. Under the assumption that a video mode detection for each block can be performed accurately and with high reliability, the motion path of a video mode object does not interfere with that of a film mode object.

Summarizing, the present invention enables to improve film mode determinations in particular for border areas of moving objects. This is achieved by a film mode extrapolation. The direction of a motion vector of a current block is reversed and the film mode indication of the target block determined based on the reversed motion vector is extrapolated towards the current block. In this manner, the accuracy of film mode determination for the current image can be improved and image processing yielding improved picture quality can be improved accordingly.

**Claims**

1. A method for determining a film mode indication for a current image divided into a plurality of image areas, said current image being part of an image sequence, the method comprising the steps of:

   obtaining a motion vector (30) for a current image area (20),

   **characterised by**
   determining film mode indications for a plurality of image areas of said current image,
   calculating a reversed motion vector (40) having the length of said obtained motion vector (30) and a reversed direction,
   determining a film mode indication for the image area (45) pointed to by said reversed motion vector (40), and correcting film mode indications for image areas (50) of the current image by setting image areas (50) between said current image area (20) and said image area (45) pointed to by said reversed motion vector (40) to film mode if said film mode indication of said image area (45) pointed to by said reversed motion vector is film mode.

2. A method according to claim 1, wherein said image areas (50) are only set to film mode if the film mode indication of said current image area (20) is not film mode.

3. A method according to claim 1 or 2, wherein the length of said reversed motion vector (40) is clipped if said calculated motion vector (40) points to a position outside of the current image.

4. A method according to any of claims 1 to 3, wherein said images of said video sequence being divided into a plurality of blocks and said film mode indications and motion vectors (30) are provided on a block basis.

5. A method according to claim 4, wherein said reversed motion vector (40) being quantized to fit into the raster of image blocks.

6. A method according to any of claims 1 to 5, wherein the image areas (50) to be set to film mode are selected in accordance with a predefined image area pattern.

7. A method according to claim 6, wherein said predefined pattern is selected from a plurality of pre-stored patterns in accordance with the relative positions of the current image area (20) and the image area (45) pointed to by said reversed motion vector (40).

8. A method according to claim 7, wherein said pre-stored patterns provide all possible combinations of relative positions of said current image area (20) and said image area (45) pointed to by said reversed motion vector (40).

9. A method according to any of claims 1 to 8, wherein the image areas (50) to be set to film mode are determined based on an iterative determination starting at said current image area (20) and stepwisely approaching said image area (45) pointed to by said reversed motion vector (40).

10. A method according to claim 9, wherein the step size for determining new image areas to be set to film mode is determined based on the reversed motion vector's (40) orientation.

11. A method according to claim 10, wherein said reversed motion vector (40) has a horizontal and vertical component and the step size is calculated by dividing the larger vector component by the smaller vector component.

12. A method according to any of claims 1 to 11, further comprising the step of storing an additional indication in connection with each of said image areas indicating whether or not said film mode indication has been corrected to film mode.

13. A method according to any of claims 1 to 12, wherein said film mode indication indicates either film mode or video mode for each individual image area.

14. A method according to claim 12 or 13, wherein a correction of film mode indications is only effected if the film mode indication of the image area (45) pointed to by said reversed motion vector (40) has not been corrected.

15. A method according to any of claims 1 to 14, further comprising the step of setting image areas (50) between said current image area (20) and an image area (45) pointed to by said reversed motion vector (40) to video mode if said film mode indication received for said image area (45) pointed to by said reversed motion vector (40) is video mode.

16. A method according to claim 15, wherein image areas (50) are only set to video mode if the film mode indication of said current image area (20) is film mode.

17. A method for performing a motion compensated image processing comprising the steps of:

   receiving motion vectors determined for a current image,
   determining film mode indications for the current image,
   correcting the film mode indications determined for the current image by applying a method in accordance with any of claims 1 to 16, and
   performing motion compensated image processing based on the image data of the current image by applying motion compensation in accordance with the respective film mode indications.

18. A film mode detector for determining a film mode indication for a current image divided into a plurality of image areas, said current image being part of an image sequence, comprising:

   input means for obtaining a motion vector (30) for a current image area (20) of the current image,

   **characterised by**
   means for determining film mode indications for a plurality of image areas of the current image,
   calculation means for calculating a reversed motion vector (40) having the length of said received motion vector (30) and a reversed direction, and
   extrapolation means for correcting film mode indications (50) for image areas of the current image by setting image areas (50) between said current image area (20) and said image area (45) pointed to by said reversed motion vector (40) to film mode if said film mode indication of said image area (45) pointed to by said reversed motion vector is film mode.

19. A film mode detector according to claim 18, wherein said extrapolation means being configured to only set said image areas (50) to film mode if the film mode indication of said current image area (20) is not film mode.

20. A film mode detector according to claim 18 or 19, wherein said extrapolation means being configured to clip the length of said reversed motion vector (40) if said calculated motion vector (40) points to a position outside of the current image.

21. A film mode detector according to any of claims 18 to 20, wherein said images of said video sequence being divided into a plurality of blocks and said film mode indications and motion vectors (30) are provided on a block basis.

22. A film mode detector according to claim 21, wherein said extrapolation means quantizing said reversed motion vector (40) to fit into the raster of image blocks.

23. A film mode detector according to any of claims 18 to 22, wherein said extrapolation means selecting the image areas (50) to be set to film mode in accordance with a predefined image area pattern.

24. A film mode detector according to claim 23, further comprising a memory for storing a plurality of predefined patterns and wherein said extrapolation means selecting said predefined pattern from said plurality of pre-stored patterns in accordance with the relative positions of the current image area (20) and the image area (45) pointed to by said reversed motion vector (40).

25. A film mode detector according to claim 24, wherein said memory storing patterns of all possible combinations of relative positions of said current image area (20) and said image area (45) pointed to by said reversed motion vector (40).

26. A film mode detector according to any of claims 18 to 25, wherein said extrapolation means determining the image areas (50) to be set to film mode based on an iterative determination starting at said current image area (20) and stepwisely approaching said image area (45) pointed to by said reversed motion vector (40).

27. A film mode detector according to claim 26, wherein said extrapolation means setting the step size for determining new image areas to be set to film mode based on the reversed motion vector's (40) orientation.

28. A film mode detector according to claim 27, wherein said reversed motion vector (40) has a horizontal and vertical component and said extrapolation means calculating the step size by dividing the larger vector component by the smaller vector component.

29. A film mode detector according to any of claims 18 to 28, wherein said extrapolation means storing an additional indication in connection with each of said image areas indicating whether or not said film mode indication has been corrected to film mode.

30. A film mode detector according to any of claims 18 to 29, wherein said film mode indication indicates either film mode or video mode for each individual image area.

31. A film mode detector according to claim 29 or 30, wherein said extrapolation only effects a correction of film mode indications if the film mode indication of the image area (45) pointed to by said reversed motion vector (40) has not been corrected.

32. A film mode detector according to any of claims 18 to 31, wherein said extrapolation means further setting image areas (50) between said current image area (20) and an image area (45) pointed to by said reversed motion vector (40) to video mode if said film mode indication received for said image area (45) pointed to by said reversed motion vector (40) is video mode.

33. A film mode detector according to claim 32, wherein said extrapolation means only sets image areas (50) to video mode if the film mode indication of said current image area (20) is film mode.

34. A motion compensator for processing an input image sequence in accordance with a field of motion vectors and film mode indications for each image, comprising:

    a film mode detector in accordance with any of claims 18 to 33 for determining extrapolated film mode indications for the image areas of each image, and
    a selector for selecting motion compensation for each individual image area in accordance with the respective film mode indication.

**Patentansprüche**

1. Verfahren zur Bestimmung einer Filmmodusangabe für ein aktuelles Bild, das in eine Mehrzahl von Bildbereiche unterteilt ist, wobei das aktuelle Bild Teil einer Bildsequenz ist, das Verfahren umfasst die Schritte:

    Erhalten eines Bewegungsvektors (30) für einen aktuellen Bildbereich (20),

    **gekennzeichnet durch**
    Bestimmen von Filmmodusangaben für eine Mehrzahl von Bildbereichen des aktuellen Bildes,
    Berechnen eines entgegengesetzten Bewegungsvektors (40), der die Länge des erhaltenen Bewegungsvektors (30) und eine entgegengesetzte Richtung aufweist,
    Bestimmen einer Filmmodusangabe für den Bildbereich (45), auf den der umgekehrte Bewegungsvektor (40) weist, und
    Korrigieren von Filmmodusangaben für Bildbereiche (50) des aktuellen Bildes **durch** Setzen von Bildbereichen (50) zwischen dem aktuellen Bildbereich (20) und dem Bildbereich (45) auf den der umgekehrten Bewegungsvektor (40) weist, auf Filmmodus, wenn die Filmmodusangabe des Bildbereichs (45), auf den der umgekehrten Bewegungsvektor weist, der Filmmodus ist.

2. Verfahren nach Anspruch 1, wobei nur Bildbereiche (50) auf den Filmmodus gesetzt werden, wenn die Filmmodusangabe des aktuellen Bildbereichs (20) nicht Filmmodus ist.

3. Verfahren nach Anspruch 1 oder 2, wobei die Länge des entgegengesetzten Bewegungsvektors (40) abgeschnitten wird, wenn der berechnete Bewegungsvektor (40) auf eine Position außerhalb des aktuellen Bilds weist.

4. Verfahren nach einem der Ansprüche 1 bis 3, wobei die Bilder der Videosequenz in eine Mehrzahl von Blöcken geteilt werden und die Filmmodusangaben und Bewegungsvektoren auf Blockbasis angegeben werden.

5. Verfahren nach Anspruch 4, wobei der entgegengesetzte Bewegungsvektor (40) quantisiert wird, um in das Raster der Blöcke zu passen.

6. Verfahren nach einem der Ansprüche 1 bis 5, wobei Bildbereiche (50), die auf Filmmodus gesetzt werden sollen, entsprechend einem vordefinierten Bildbereichmuster ausgewählt werden.

7. Verfahren nach Anspruch 6, wobei das vordefinierte Muster aus einer Mehrzahl von vorab gespeicherten Mustern ausgewählt wird, in Übereinstimmung mit der relativen Positionen des aktuellen Bildbereichs (20) und dem Bildbereiche (45), auf den der entgegengesetzte Bewegungsvektor (40) weist.

8. Verfahren nach Anspruch 7, wobei die vorab gespeicherten Muster alle möglichen Kombinationen von relativen Positionen des aktuellen Bildbereichs (20) und des Bildbereichs (45), auf den der entgegengesetzten Bewegungsvektor (40) weist, bereitstellen.

9. Verfahren nach einem der Ansprüche 1 bis 8, wobei Bildbereiche (50), die auf Filmmodus gesetzt werden sollen, auf Basis einer iterativen Bestimmung bestimmt werden, die bei dem aktuellen Bildbereich (20) beginnt und sich schrittweise dem Bildbereich nährt, auf den der entgegengesetzte Bewegungsvektor (40) weist.

10. Verfahren nach Anspruch 9, wobei die Schrittweite zur Bestimmung neuer Bildbereiche, die auf Filmmodus festgesetzt werden sollen, basierend auf der Orientierung des entgegengesetzten Bewegungsvektors (40) bestimmt wird.

11. Verfahren nach Anspruch 10, wobei der entgegengesetzte Bewegungsvektor (40) eine horizontale und vertikale Komponente hat, und die Schrittweite durch Teilung der größeren Vektorkomponente durch die kleinere Vektorkomponente berechnet wird.

12. Verfahren nach einem der Ansprüche 1 bis 11, das den Schritt umfasst, eine zusätzliche Angabe zu speichern, die in Zusammenhang mit jeder der Bildbereichsangaben angibt, ob oder ob nicht die Filmmodusangabe auf Filmmodus korrigiert wurde.

13. Verfahren nach einem der Ansprüche 1 bis 12, wobei die Filmmodusangabe entweder Filmmodus oder Videomodus für jeden einzelnen Bildbereiche angibt.

14. Verfahren nach Anspruch 12 oder 13, wobei eine Korrektur der Filmmodusangaben nur erfolgt, wenn die Filmmodusangabe des Bildbereichs (45), auf den der entgegengesetzte Bewegungsvektor (40) weist, nicht korrigiert wurde.

15. Verfahren nach einem der Ansprüche 1 bis 14, das den Schritt umfasst, Bildbereiche (50) zwischen dem aktuellen Bildbereich (20) und einem Bildbereiche (45), auf den der entgegengesetzten Bewegungsvektor (40) weist, auf Videomodus zu setzten, wenn als Filmmodusangabe des Bildbereichs (45), auf den der entgegengesetzte Bewegungsvektor (40) weist, Videomodus erhalten wurde.

16. Verfahren nach Anspruch 15, wobei Bildbereiche (50) nur dann auf Videomodus gesetzt werden, wenn die Filmmodusangabe des aktuellen Bildbereichs Filmmodus ist

17. Verfahren zum Ausführen einer bewegungskompensierten Bildverarbeitung, das die Schritte umfasst:

   Empfangen von Bewegungsvektoren, die für ein aktuelles Bild bestimmt wurden,
   Bestimmung von Filmmodusangaben für ein aktuelles Bild,
   Korrektur von Filmmodusangaben, die für ein aktuelles Bild bestimmt wurden, durch Anwendungen eines Verfahrens nach einem der Ansprüche 1 bis 16, und
   Ausführen einer bewegungskompensierten Bildverarbeitung, basierend auf den Bilddaten eines aktuellen Bildes durch Anwendungen einer Bewegungskompensation gemäß den entsprechenden Filmmodusangaben.

18. Filmmodusdetektor zur Bestimmung einer Filmmodusangabe für ein aktuelles Bild, das in eine Mehrzahl von Bildbereiche unterteilt ist, wobei das aktuelle Bild Teil einer Bildsequenz ist, umfassend:

eine Eingabeeinrichtung zum Erhalten eines Bewegungsvektors (30) für einen aktuellen Bildbereich (20) eines aktuellen Bildes,

**gekennzeichnet durch**

eine Einrichtung zur Bestimmung von Filmmodusangaben für eine Mehrzahl von Bildbereichen eines aktuellen Bildes,

eine Berechnungseinrichtung zur Berechnung eines entgegengesetzten Bewegungsvektors (40), der die Länge des erhaltenen Bewegungsvektors (30) und eine entgegengesetzte Richtung aufweist, und

Extrapoliereinrichtung zur Korrektur von Filmmodusangaben (50) für Bildbereiche eines aktuellen Bildes **durch** Setzen von Filmmodus für Bildbereiche (50) zwischen dem aktuellen Bildbereich (20) und dem Bildbereich (45), auf den der entgegengesetzten Bewegungsvektor (40) weist, wenn die Filmmodusangabe des Bildbereichs (45), auf den der entgegengesetzten Bewegungsvektor weist, Filmmodus ist.

19. Filmmodusdetektor nach Anspruch 18, wobei die Extrapoliereinrichtung so konfiguriert ist, dass sie nur Bildbereiche (50) auf Filmmodus setzt, wenn die Filmmodusangabe des aktuellen Bildbereiche (20) nicht Filmmodus ist.

20. Filmmodusdetektor nach Anspruch 18 oder 19, wobei die Extrapoliereinrichtung so konfiguriert ist, dass sie die Länge des entgegengesetzten Bewegungsvektors (40) abschneidet, wenn der berechnete Bewegungsvektor (40) auf eine Position außerhalb des aktuellen Bildes weist.

21. Filmmodusdetektor nach einem der Ansprüche 18 bis 20, wobei die Bilder der Videosequenz in eine Mehrzahl von Blöcken geteilt werden und die Filmmodusangaben und Bewegungsvektoren (30) auf Blockbasis bereitgestellt werden.

22. Filmmodusdetektor nach Anspruch 21, wobei die Extrapoliereinrichtung den entgegengesetzten Bewegungsvektor (40) quantisiert, um ihn in das Raster der Bildblöcke einzupassen.

23. Filmmodusdetektor nach einem der Ansprüche 18 bis 22, wobei die Extrapoliereinrichtung die Bildbereiche (50), die auf Filmmodus gesetzt werden sollen, entsprechend einem vordefinierten Bildbereichmuster auswählt.

24. Filmmodusdetektor nach Anspruch 23, der ferner einen Speicher umfasst, zur Speicherung einer Mehrzahl von vordefinierten Mustern, und wobei die Extrapoliereinrichtung die vordefinierten Muster aus einer Mehrzahl von vorab gespeicherten Mustern entsprechend der relativen Positionen des aktuellen Bildbereichs (20) und des Bildbereichs (45) auf den der entgegengesetzten Bewegungsvektor (40) weist, auswählt.

25. Filmmodusdetektor nach Anspruch 24, wobei der Speicher Muster für alle möglichen Kombinationen von relativen Positionen des aktuellen Bildbereichs (20) und des Bildbereichs (45) auf das der entgegengesetzten Bewegungsvektor (40) weist, speichert.

26. Filmmodusdetektor nach einem der Ansprüche 18 bis 25, wobei die Extrapoliereinrichtung Bildbereiche (50), die auf Filmmodus gesetzt werden sollen, basierend auf einer iterativen Bestimmung bestimmt, die bei dem aktuellen Bildbereich (20) beginnt und sich schrittweise dem Bildbereiche (45) nähert, auf den der entgegengesetzten Bewegungsvektor (40) weist.

27. Filmmodusdetektor gemäß Anspruch 26, wobei die Extrapoliereinrichtung die Schrittweite zur Bestimmung neuer Bildbereiche, die auf Filmmodus gesetzt werden sollen, basierend auf der Orientierung des entgegengesetzten Bewegungsvektors (40) setzt.

28. Filmmodusdetektor nach Anspruch 27, wobei der entgegengesetzte Bewegungsvektor (40) eine horizontale und vertikale Komponente hat und die Extrapoliereinrichtung die Schrittweite durch Teilung der größeren Vektorkomponente durch die kleinere Vektorkomponente berechnet.

29. Filmmodusdetektor nach einem der Ansprüche 18 bis 28, wobei die Extrapoliereinrichtung eine zusätzliche Angabe in Zusammenhang mit jedem der Bildbereiche speichert, die angibt, ob oder ob nicht die Filmmodusangabe auf Filmmodus korrigiert wurde.

30. Filmmodusdetektor nach einem der Ansprüche 18 bis 29, wobei die Filmmodusangabe entweder Filmmodus oder Videomodus für jeden einzelnen Bildbereiche angibt.

**31.** Filmmodusdetektor nach Anspruch 29 oder 30, wobei die Extrapolierung nur eine Korrektur der Filmmodusangaben bewirkt, wenn die Filmmodusangabe des Bildbereichs (45) auf den der entgegengesetzten Bewegungsvektor (40) weist, nicht korrigiert wurde.

**32.** Filmmodusdetektor nach einem der Ansprüche 18 bis 31, wobei die Extrapoliereinrichtung ferner Bildbereiche (50) zwischen dem aktuellen Bildbereich (20) und dem Bildbereich (45), auf den der entgegengesetzten Bewegungsvektor (40) weist, auf Videomodus setzt, wenn als Filmmodusangabe für den Bildbereiche (45) auf den der entgegengesetzten Bewegungsvektor (40) weist, Videomodus erhalten wurde.

**33.** Filmmodusdetektor nach Anspruch 32, wobei die Extrapoliereinrichtung nur Bildbereiche (50) auf Videomodus setzt, wenn die Filmmodusangabe des aktuellen Bildbereichs (20) Filmmodus ist.

**34.** Bewegungskompensator zur Verarbeitung einer Eingangsbildfolge entsprechend einem Feld von Bewegungsvektoren und Filmmodusangaben für jedes Bild, umfassenden:

> einen Filmmodusdetektor nach einem der Ansprüche 18 bis 33, zur Bestimmung extrapolierter Filmmodusangaben für Bildbereiche jedes Bildes, und
> eine Auswahleinrichtung zur Auswahl einer Bewegungskompensation für jeden einzelnen Bildbereich, gemäß den entsprechenden Filmmodusangaben.


## Revendications

**1.** Procédé pour la détermination d'une indication de mode de ciné pour une image courante divisée en une pluralité de zones d'image, ladite image courante étant une partie d'une séquence d'images, le procédé comprenant les étapes de :

> obtention d'un vecteur de mouvement (30) pour une zone d'image courante (20),

> **caractérisé par**
> la détermination des indications du mode de ciné pour une pluralité de zones d'image de ladite image courante,
> le calcul d'un vecteur de mouvement inversé (40) ayant la longueur dudit vecteur de mouvement obtenu (30) et un sens inversé,
> la détermination d'une indication de mode de ciné pour la zone d'image (45) indiquée au moyen dudit vecteur de mouvement inversé (40), et
> la correction des indications de mode de ciné pour les zones d'image (50) de l'image courante au moyen du réglage des zones d'image (50) entre ladite zone d'image courante (20) et ladite zone d'image (45) indiquée au moyen dudit vecteur de mouvement inversé (40) en mode ciné si ladite indication de mode de ciné de ladite zone d'image (45) indiquée au moyen dudit vecteur de mouvement inversé est un mode ciné.

**2.** Procédé selon la revendication 1, dans lequel lesdites zones d'image (50) sont seulement réglées sur le mode ciné si l'indication de mode de ciné de ladite zone d'image courante (20) n'est pas le mode ciné.

**3.** Procédé selon la revendication 1 ou 2, dans lequel la longueur dudit vecteur de mouvement inversé (40) est enlevée si ledit vecteur de mouvement calculé (40) indique une position à l'extérieur de l'image courante.

**4.** Procédé selon l'une quelconque des revendications 1 à 3, dans lequel lesdites images de ladite séquence vidéo sont divisées en une pluralité de blocs et lesdites indications de mode de ciné et les vecteurs de mouvement (30) sont fournis sur une base de bloc.

**5.** Procédé selon la revendication 4, dans lequel ledit vecteur de mouvement inversé (40) est quantifié pour s'ajuster dans la trame des blocs d'image.

**6.** Procédé selon l'une quelconque des revendications 1 à 5, dans lequel les zones d'image (50) à régler en mode ciné sont sélectionnées en accord avec un motif de zone d'image prédéfini.

**7.** Procédé selon la revendication 6, dans lequel ledit motif prédéfini est choisi parmi une pluralité de motifs pré stockés en accord avec les positions relatives de la zone d'image courante (20) et de la zone d'image (45) indiquées au moyen dudit vecteur de mouvement inversé (40).

8. Procédé selon la revendication 7, dans lequel lesdits motifs pré stockés fournissent toutes les combinaisons possibles des positions relatives de ladite zone d'image courante (20) et de ladite zone d'image (45) indiquées au moyen dudit vecteur de mouvement inversé (40).

9. Procédé selon l'une quelconque des revendications 1 à 8, dans lequel les zones d'image (50) à régler en mode ciné sont déterminées sur la base d'une détermination itérative démarrant à ladite zone d'image courante (20) et approchant de façon séquentielle ladite zone d'image (45) indiquée au moyen dudit vecteur de mouvement (40).

10. Procédé selon la revendication 9, dans lequel le pas de progression pour la détermination des nouvelles zones d'image à régler en mode ciné est déterminée sur la base de l'orientation du vecteur de mouvement inversé (40).

11. Procédé selon la revendication 10, dans lequel ledit vecteur de mouvement inversé (40) a une composante horizontale et verticale et le pas de progression est calculé en divisant la composante du plus grand vecteur par la composante du plus petit vecteur.

12. Procédé selon l'une quelconque des revendications 1 à 11, comprenant de plus l'étape de stockage d'une indication additionnelle en connexion avec chacune desdites zones d'image indiquant si ou non ladite indication de mode de ciné a été corrigée en mode ciné.

13. Procédé selon l'une quelconque des revendications 1 à 12, dans lequel ladite indication de mode de ciné indique soit le mode ciné soit le mode vidéo pour chaque zone d'image individuelle.

14. Procédé selon la revendication 12 ou 13, dans lequel une correction des indications du mode de ciné est seulement effectuée si l'indication de mode de ciné de la zone image (45) indiquée au moyen dudit vecteur de mouvement inversé (40) n'a pas été corrigée.

15. Procédé selon l'une quelconque des revendication 1 à 14, comprenant de plus l'étape de réglage des zones d'image (50) entre ladite zone d'image courante (20) et une zone d'image (45) indiquée au moyen dudit vecteur de mouvement inversé (40) en mode vidéo si ladite indication de mode de ciné reçue pour ladite zone image (45) indiquée au moyen dudit vecteur de mouvement inversé (40) est le mode vidéo.

16. Procédé selon la revendication 15, dans lequel les zones d'image (50) sont seulement réglées en mode vidéo si l'indication du mode de ciné de ladite zone d'image courante (20) est le mode ciné.

17. Procédé pour la réalisation d'un traitement d'image compensé en mouvement comprenant les étapes de :

réception de vecteurs de mouvement déterminés pour une image courante,
détermination des indications de mode de ciné pour l'image courante,
correction des indications de mode de ciné déterminées pour l'image courante au moyen de l'application d'une méthode selon l'une quelconque des revendications 1 à 16, et
réaliser un traitement d'image compensé en mouvement à partir des données d'image de l'image courante en appliquant une compensation de mouvement en accord avec les indications respectives du mode de ciné.

18. Détecteur de mode de ciné pour la détermination de l'indication du mode de ciné pour une image courante divisée en une pluralité de zones d'image, ladite image courante étant une partie d'une séquence d'images, comprenant :

un moyen d'entrée pour l'obtention d'un vecteur de mouvement (30) pour une zone d'image courante (20) de l'image courante,

**caractérisé par**
un moyen pour la détermination des indications du mode de ciné pour une pluralité de zones d'images de l'image courante,
un moyen de calcul pour le calcul d'un vecteur de mouvement inversé (40) ayant la longueur dudit vecteur de mouvement reçu (30) et un sens inversé, et
un moyen d'extrapolation pour la correction des indications du mode de ciné (50) pour les zones d'image de l'image courante en réglant les zones d'image (50) entre ladite zone d'image courante (20) et ladite zone d'image (45) indiquée au moyen dudit vecteur de mouvement inversé (40) en mode ciné si ladite indication du mode de ciné de ladite zone d'image (45) indiquée au moyen dudit vecteur de mouvement inversé est un mode ciné.

19. Détecteur de mode de ciné selon la revendication 18, dans lequel ledit moyen d'extrapolation est configuré pour régler seulement lesdites zones d'image (50) en mode ciné si l'indication de mode de ciné de ladite zone d'image courante (20) n'est pas le mode ciné.

20. Détecteur de mode de ciné selon la revendication 18 ou 19, dans lequel ledit moyen d'extrapolation est configuré pour enlever la longueur dudit vecteur de mouvement inversé (40) si ledit vecteur de mouvement calculé (40) indique une position à l'extérieur de l'image courante.

21. Détecteur de mode de ciné selon l'une quelconque des revendications 18 à 20, dans lequel lesdites images de ladite séquence vidéo sont divisées en une pluralité de blocs et lesdites indications de mode de ciné et les vecteurs de mouvement (30) sont fournis sur une base de bloc.

22. Détecteur de mode de ciné selon la revendication 21, dans lequel ledit moyen d'extrapolation quantifie ledit vecteur de mouvement inversé (40) pour l'ajuster dans la trame des blocs d'image.

23. Détecteur de mode de ciné selon l'une quelconque des revendications 18 à 22, dans lequel ledit moyen d'extrapolation sélectionne les zones d'image (50) à régler en mode ciné en accord avec un motif de zone d'image prédéterminé.

24. Détecteur de mode de ciné selon la revendication 23, comprenant de plus une mémoire pour stocker une pluralité de motifs prédéfinis et dans lequel ledit moyen d'extrapolation sélectionne ledit motif prédéfini à partir de ladite pluralité de motifs pré stockés en accord avec les positions relatives de la zone d'image courante (20) et de la zone d'image (45) indiquées au moyen dudit vecteur de mouvement inversé (40).

25. Détecteur de mode de ciné selon la revendication 24, dans lequel ladite mémoire stocke les motifs de toutes les combinaisons possibles de positions relatives de ladite zone d'image courante (20) et de ladite zone d'image (45) indiquées au moyen dudit vecteur de mouvement inversé (40).

26. Détecteur de mode de ciné selon l'une quelconque des revendications 18 à 25, dans lequel ledit moyen d'extrapolation détermine les zones d'image (50) de façon à être réglées en mode ciné sur la base d'une détermination itérative démarrant à ladite zone d'image courante (20) et approchant de façon séquentielle ladite zone d'image (45) indiquée au moyen dudit vecteur de mouvement inversé (40).

27. Détecteur de mode de ciné selon la revendication 26, dans lequel ledit moyen d'extrapolation d'image règle le pas de progression pour la détermination de nouvelles zones d'image à régler en mode ciné sur la base de l'orientation du vecteur de mouvement inversé (40).

28. Détecteur de mode de ciné selon la revendication 27, dans lequel ledit vecteur de mouvement inversé (40) a une composante horizontale et verticale et ledit moyen d'extrapolation calcule le pas de progression en divisant le vecteur la composante du vecteur plus large par la composante du vecteur plus petit.

29. Détecteur de mode de ciné selon l'une quelconque des revendications 18 à 28, dans lequel ledit moyen d'extrapolation stockant une indication additionnelle en connexion avec chacune desdites zones d'image indique si ou non ladite indication de mode de ciné a été corrigée en mode ciné.

30. Détecteur de mode de film selon l'une quelconque des revendications 18 à 29, dans lequel ladite indication de mode de film indique soit le mode film soit le mode vidéo pour chaque zone d'image individuelle.

31. Détecteur de mode de ciné selon la revendication 29 ou 30, dans lequel ladite extrapolation effectue seulement une correction des indications de mode de ciné si l'indication de mode de ciné de la zone image (45) indiquée au moyen du vecteur de mouvement inversé (40) n'a pas été corrigée.

32. Détecteur de mode de ciné selon l'une quelconque des revendications 18 à 31, dans lequel ledit moyen d'extrapolation règle ensuite les zones d'image (50) entre ladite zone d'image courante (20) et une zone d'image (45) indiquées au moyen dudit vecteur de mouvement inversé (40) en mode vidéo si ladite indication de mode de ciné reçue pour ladite zone d'image (45) indiquée au moyen dudit vecteur de mouvement inversé (40) est le mode vidéo.

33. Détecteur de mode de ciné la revendication 32, dans lequel ledit moyen d'extrapolation règle seulement les zones d'image (50) en mode vidéo si l'indication de mode de ciné de ladite zone d'image courante (20) est le mode ciné.

34. Compensateur de mouvement pour le traitement d'une séquence d'images entrée en accord avec un champ de vecteurs de mouvement et des indications de mode de ciné pour chaque image, comprenant :

un détecteur de mode de ciné en accord avec l'une quelconque des revendications 18 à 33 pour la détermination des indications de mode de ciné extrapolées pour les zones d'image de chaque image, et
un sélecteur pour la sélection d'une compensation de mouvement pour chaque zone d'image individuelle en accord avec l'indication respective de mode ciné.

| B(0,0) | B(1,0) | B(2,0) | B(3,0) | B(4,0) | B(5,0) | B(6,0) | B(7,0) | | | $B(x_{max}\text{-}1 , 0)$ |
| B(0,1) | B(1,1) | B(2,1) | B(3,1) | B(4,1) | B(5,1) | B(6,1) | B(7,1) | | | |
| B(0,2) | B(1,2) | B(2,2) | B(3,2) | B(4,2) | B(5,2) | B(6,2) | B(7,2) | | | |
| B(0,3) | B(1,3) | B(2,3) | B(3,3) | B(4,3) | B(5,3) | B(6,3) | B(7,3) | | | |
| B(0,4) | B(1,4) | B(2,4) | B(3,4) | B(4,4) | B(5,4) | B(6,4) | B(7,4) | | | |
| B(0,5) | B(1,5) | B(2,5) | B(3,5) | B(4,5) | B(5,5) | B(6,5) | B(7,5) | | | |
| B(0,6) | B(1,6) | B(2,6) | B(3,6) | B(4,6) | B(5,6) | B(6,6) | B(7,6) | | | |

$B(0, y_{max}\text{-}1)$ … $B(x_{max}\text{-}1, y_{max}\text{-}1)$

## Fig. 1

Timeslots PAL

0  1  2  3  4  5  6  7  8

→ 1/50 sec
(1/60 sec)

Film Frames
@ 25Hz
(@ 30Hz)

| 0 | 1 | 2 | 3 |

Video Fields

| $E_0$ | $O_0$ | $E_1$ | $O_1$ | $E_2$ | $O_2$ | $E_3$ | $O_3$ |

Field Difference
Signal

0   1   0   1   0   1   0

Timeslots NTSC

0  1  2  3  4  5  6  7  8  9  10

→ 1/60 sec

Film Frames
@ 24Hz

| 0 | 1 | 2 | 3 |

Video Fields

| $E_0$ | $O_0$ | $E_0$ | $O_1$ | $E_1$ | $O_2$ | $E_2$ | $O_2$ | $E_3$ | $O_3$ |

Field Difference
Signal

0   0   1   0   1   0   0   1   0

# Fig. 2

Sub Image = m x n Pixels

Block Memory:

Film-mode 0/1
Artificial-mode 0/1

Vector-X

Vector-Y

# Fig. 3

a)    b)       c)    d)    e)

# Fig. 4

Reverse Extrapolation

Source Mode

Target Mode

45

Source Mode

Target Mode

Legend

Original Film-Mode
Artificial Film-Mode
Video-Mode

Motion Vector
Reversed Motion Vector

Fig. 5

EP 1 592 249 B1

Fig. 6

## Fig. 7

210 — i=-Dir1
j=0

220 — i=i+Dir1

230 — i%Step = 0

240 — j=j+Dir2

250 — k = i+Index1(Source)
l = j+Index2(Source)

260 — Mode(k,l) = Film+Arti.

270 — i <= |V|

280 — End of Block Marking

Vx=6, Vy=4 → Step=2

Source   Target   Artificial   Reverse Vector

## Fig. 8

EP 1 592 249 B1

Table Entry: | 3/4 | **010101**

Legend

■ Film Mode   ╱ Reverse Vector

□ Artificial Mode   ↓ Step down

◄— Step left

Fig. 9

Fig. 10a

Complete Extrapolation Look-up-table
(Example embodiment of Vector max x=8, y=6)

## Fig. 10b

**EP 1 592 249 B1**

**REFERENCES CITED IN THE DESCRIPTION**

**Patent documents cited in the description**

- EP 0720366 A
- EP 1198138 A
- EP 0994626 A
- US 6058140 A
- US 20030123547 A
- US 5610662 A